# EUROPEAN PATENT APPLICATION

(11) **EP 1 386 704 A2**
(43) Date of publication of application: **04.02.2004**
(21) Application number: 03077324.6
(22) Date of filing: 23.07.2003
(51) Int. Cl.: B28B 3/00

(54) **Hydraulic connection means between isostatic die and respective pad**

(30) Priority: 29.07.2002 IT RE20020025
(71) Applicant: Sacmi Molds & Dies S.p.A., 41049 Sassuolo (Modena) (IT)
(72) Inventor: Leccese, Massimo c/o Sacmi Molds & Dies S. P. A., 41049 Sassuolo (Modena) (IT); Mantegani, Enzo c/o Sacmi Molds & Dies S. P. A., 41049 Sassuolo (Modena) (IT)
(74) Representative: Corradini, Corrado

(57) **Abstract**

A connection coupling (6) between the hydraulic circuits (5) of an isostatic die (1) and the respective support pad (7) comprises a first part (61) securely associated with the die (1) and completely contained within the die body, a second part (62) associated with the pad (7) and completely contained within the pad body, a valving element (615) contained in one of said two parts and, contained in the other part, operating means for the valving element, said two parts being mutually associated in correspondence with mating flat walls, one of which comprises a front-sealing annular gasket (624).

## Description

This invention relates to isostatic dies, and more particularly to isostatic dies the hydraulic circuit of which is connected to the hydraulic circuit of the pad which supports the die.

The known art contains ceramic tile forming moulds comprising a base plate on which a block is positioned by way of interposed means, forming part of the press, for raising the block from the plate when required.

0n the block there is located at least one pad carrying a die for forming one face of the tile.

The die is inserted into the cavity of a die plate supported by the base plate via means which enable the die plate to undergo vertical movements.

Moulds of the aforesaid type sometimes comprise an isostatic die.

In its most simple implementation, this type of die presents a cavity closed upperly by a membrane filled with incompressible liquid, such as hydraulic oil.

Said cavity generally comprises a grid to which the membrane is fixed, but sometimes it is merely virtual in that the die is associated with a membrane resting on the metal base of the die and fixed to it at predetermined points.

The various cells defined between the membrane fixing points are filled with pressurized oil, which inflates the membrane in those regions not fixed to the die base when this is required by the tile forming cycle.

The isostatic dies of multi-cavity moulds are (sometimes) currently connected together by an external tube which, with branches equal to the number of dies, is connected into the front side of the die by an automatic coupling, known as a quick connector. This connection consequently renders said isostatic dies "communicating", enabling oil to pass from one die to the other.

Said automatic couplings must be able to open the connection between the two circuits when the coupling is inserted, and to isolate at least the die hydraulic circuit, or preferably both the circuits, when the coupling is disengaged.

To perform this task, front insertion couplings are known in which the seal is made by annular gaskets positioned between two coaxial cylindrical surfaces of the coupling.

If the isostatic dies are installed in the upper part of the mould (tile formed with its "best face" downwards) no particular problems arise in connecting the isostatic dies with the current method.

However, if the isostatic dies are installed in the lower part of the mould (tile formed with its "best face" upwards), a suitable seat has to be made in the lower magnetic pad to enable the tube of each die to be brought to the outside of the mould cavity, this involving serious difficulties which make the operation slow and dangerous for the operators.

The object of the invention is to make the die connection by a hydraulic coupling between the contacting surface of the die and the relative magnetic pad; the connection is completed by hydraulic cabling of the various pads.

This object is attained by a coupling having the characteristics defined in the claims.

It comprises two matching parts, one of which contains a seal valve openable from the outside, and the other comprises at least the means for opening said valve when the coupling is connected.

Said two parts are arranged to be engaged along flat surfaces perpendicular to the axis of the coupling, and between which seal means acting in a frontal direction operate.

The functional and constructional merits and characteristics of the invention will be apparent from the ensuing detailed description given by way of non-limiting example with reference to the accompanying drawing.

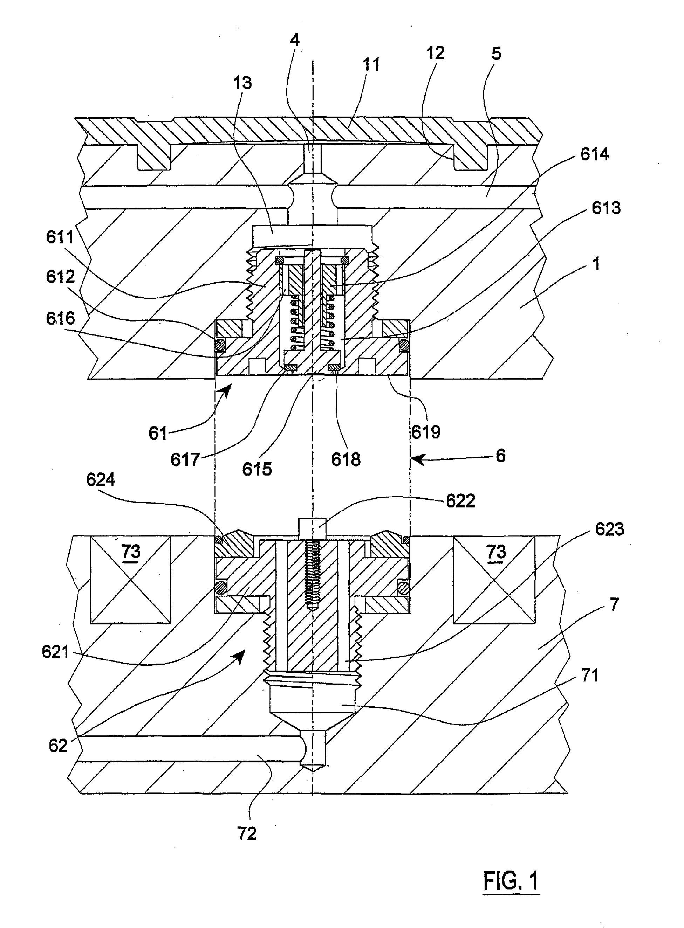

Figure 1 is a section through a coupling according to the invention in its disengaged position.

The figure shows a portion of a die 1 on which there rests an elastic membrane 11 fixed to the die in correspondence with a grid of channels 12.

Into each cell defined by the grid there opens a conduit 4 extending from a common manifold 5.

A point on the manifold communicates with the outside via a coupling 6 which, according to the invention, presents a part 61 completely contained within a cavity of the die 1, and a part 62 completely contained within the pad 7 associated with the die 1.

The coupling part 61 comprises an outer body 611 securely fixed in a sealed manner, by virtue of the O-ring 612, into a cavity 13 of the die.

The part 61 comprises an axial conduit 613 into which there is fixed a guide bush 614 within which a valving element 615 slides.

The guide bush 614 comprises axial holes 616 for free passage of the hydraulic oil.

The valving element 615 frontally seals against a valve seat 617 provided at the base of the axial conduit 613, by way of a suitable interposed gasket 618.

On the outside of the valve seat a flat annular surface 619 is present representing the sealing surface of the coupling.

The part 62 of the coupling is completely and sealedly received in the cavity 71 of the pad 7 which is to be associated with the die.

Said part 62 comprises an outer body 621 from which there upwardly projects a central peg , indicated by the reference numeral 622, about which holes 623 are provided for free passage of the hydraulic oil.

The cavity 71 communicates with a feed conduit 72 for pressurized hydraulic oil.

On the outside of the body 621 there is positioned an annular seal gasket 624 which faces and slightly projects beyond the upper surface of the pad.

External to the coupling part 62 the pad comprises magnetic means 73 to maintain the die securely fixed to and in contact with the pad.

When the die is associated with the pad, the peg 622 raises the valving element 615 to enable the hydraulic oil to pass between the conduit 72 and the die manifold 5. The opposite happens when the two parts of the coupling are separated.

All the objects of the invention are attained by virtue of the aforesaid configuration.

In this respect neither the die nor the pad presents substantially projecting coupling parts, and can hence be mutually associated by a substantially flat movement.

A small displacement perpendicular to the plane of movement is sufficient to connect together the two parts of the coupling and open hydraulic communication.

If the relative position between the pad and die is adjusted, the coupling seal is not compromised as this is made between two flat surfaces parallel to the adjustment direction.

The position of the two coupling parts can be inverted by positioning that comprising the valving element in the pad instead of in the die.

## Claims

1. A connection coupling between the hydraulic circuits of an isostatic die and the respective support pad, **characterised by** comprising a first part securely associated with the die and completely contained within the die body, a second part associated with the pad and completely contained within the pad body, a valving element contained in one of said two parts and, contained in the other part, operating means for the valving element, said two parts being mutually associated in correspondence with mating flat walls, one of which comprises a front-sealing annular gasket.

2. A coupling as claimed in claim 1, **characterised in that** one of the two parts comprises a body sealedly received in a cavity of the die or of the pad respectively, an axial conduit within said body, in said axial conduit a guide bush provided with eccentric holes for passage of the hydraulic oil, and a valving element slidable within said bush and sealedly acting against a valve seat provided in said conduit, there being provided on the outside of said valving element a flat annular surface for sealed engagement with the other part of the coupling.

3. A coupling as claimed in claim 1, **characterised in that** one of the two parts comprises a body sealedly received in a cavity of the pad or of the die respectively, at least one eccentric axial conduit within said body for passage of the hydraulic oil, a central peg fixed to said body in a central position and projecting from the surface of the pad or of the die respectively and, concentric to the body, an external annular seal gasket sealing against the facing surface of the other coupling part, the surface of the body being slightly below the surface of the pad or die respectively.
